# EUROPEAN PATENT APPLICATION

(11) **EP 2 544 439 A1**
(43) Date of publication of application: **09.01.2013**
(21) Application number: 11290308.3
(22) Date of filing: 04.07.2011
(51) Int. Cl.: H04M 11/06, H04L 5/14

(54) **A device and method for controlling re-initialisation of a subscriber line**

(71) Applicant: Alcatel Lucent, 75007 Paris (FR)
(72) Inventor: Maes, Jochen, 2431 Laakdal (BE); Timmers, Michael, 3020 Herent (BE); Guenach, Mamoun, 1830 Machelen (BE)
(74) Representative: Plas, Axel Ivo Michel

(57) **Abstract**

A device (100) for controlling re-initialisation of a subscriber line after a failure, comprises:
- means (102, 104) for receiving information indicative for a likely cause of the failure or for detecting a likely cause of the failure; and
- means (103) for adapting execution of the re-initialisation depending on the cause of the failure.

## Description

### Field of the Invention

The present invention generally relates to re-initialisation of a subscriber line after a failure, like for instance a loss of feeding power, a loss of received signal power, excessive bit errors, loss of synchronisation, drop below a minimum data rate, miscommunication between central office (CO) and customer premises equipment (CPE), non-perfect interoperability, etc. The present invention in particular concerns shortened and/or less service intrusive re-initialisation of subscriber lines after such failure.

### Background of the Invention

Subscriber lines like Digital Subscriber Lines or DSL lines retrain or re-initialise as a result of various errors including miscommunications between CO and CPE like for instance invalid commands or invalid responses to commands, loss of feeding power, loss of received signal power, non-interoperability, excessive bit errors, loss of synchronisation, manual resets by the end user or operator, drop of data rate below a minimum level, severe frame defects, etc.

In existing DSL systems, a subscriber line that experiences such errors re-initialises by applying the regular initialisation process. Such re-initialisation takes about 30 seconds or even more in vectored DSL flavours that perform crosstalk channel estimation as part of the initialisation procedure. During re-initialisation, all services are interrupted which is unacceptable for delay-sensitive applications.

While a 30 seconds initialisation procedure may be acceptable at first start-up of a line, such a lengthy initialisation procedure is not acceptable in case of retrain of a subscriber loop over which users are for instance consuming delay sensitive applications like IPTV or voice based services. In case of IPTV for instance, the typical buffer length in the set-top box or STB shall be shorter than 30 seconds as a result of which the IPTV service will be interrupted for the user and consequently loss of quality of experience (QoE).

It is an objective of the present invention to disclose a device and method for systematic controlling of re-initialisation of a subscriber loop after a fault that resolves the above mentioned shortcomings of state of the art systems. More particularly, it is an objective of the present invention to disclose a device and method that enables efficiently re-initialising subscriber loops in e.g. a less time consuming and/or less intrusive manner. Thanks to the present invention, retrain of a subscriber line after a fault will be executed faster or will be non-interruptive for certain services or both.

### Summary of the Invention

According to the present invention, the above defined objectives are realized by a device for controlling a re-initialisation of a subscriber line after a failure as defined by claim 1, the device comprising:
- means for receiving information indicative for a likely cause of the failure or for detecting a likely cause of the failure; and
- means for adapting execution of the re-initialisation depending on the suspected or identified cause.

Thus, the present invention relies on knowledge or detection of the most likely cause of the line retrain and adapts the re-initialisation depending on this cause. The cause of the failure in other words is known or detected with a certain probability. Depending on the cause of the failure, certain steps of the full initialisation pattern may be shortened or even omitted, e.g. because these steps have not been affected by the failure. Shortening or omitting steps in the re-initialisation procedure will significantly reduce the time for re-initialisation in comparison with the initial, full initialisation of the line which takes typically 30 seconds or more. Instead of or in addition to shortening/omitting certain steps in the re-initialisation procedure, the device according to the present invention may decide to keep data communication active, albeit at a lower speed, while re-initialising. This may for instance be realised by interleaving data symbols and initialisation symbols at a ratio depending on the initialisation steps that are selected for execution, the data bitrate that is required to at least sustain critical or delay sensitive applications, and the remaining available throughput after the failure. This way, depending on the cause of the failure, the current invention can also make re-initialisation less intrusive since re-initialisation stages can be performed in parallel with data transmission thereby avoiding service interruption.

In a first embodiment of the device according to the current invention, defined by claim 2, the means for adapting execution of the re-initialisation are able to omit one or more steps of a normal initialisation procedure from the re-initialisation.

Indeed, depending on the cause of the retrain, certain steps may be unaffected and need not be re-executed during re-initialisation. If for instance the retrain is caused by a loss of feeding power, it is unlikely that crosstalk channels have been affected so estimating them may be omitted from the re-initialisation procedure. In another example where retrain is caused by an interoperability issue or miscommunication between CO and CPE, the timing synchronization may still be intact as a result of which sample clock or symbol clock synchronization steps may be omitted from the re-initialisation process. In yet another example, fine adjustment of bit and gain settings may be delayed depending on the retrain cause and other information like higher layer knowledge on the applications running at the time of failure. In such case, accurate Signal-to-Noise Ratio (SNR) measurements may be omitted from the re-initialisation process and eventually be carried out later during showtime.

In a second embodiment of the device according to the current invention, defined by claim 3, the means for adapting execution of the re-initialisation are able to shorten one or more steps of a normal initialisation procedure during the re-initialisation.

Thus, depending on the cause of the retrain, the length of certain steps that form part of the full initialisation procedure may be reduced. This may for instance be the case for the crosstalk estimation steps that may be performed faster and less accurately when the cause of the retrain is unlikely to affect the crosstalk channels, e.g. a loss of feeding power. Also SNR measurement steps may be shortened enabling to re-initialise faster and reach showtime with sub-optimal bit loading, gain and coding settings, that can eventually be optimised later when more accurate SNR measurements are executed during showtime.

In a third embodiment of the device according to the current invention, defined by claim 4, the means for adapting execution of the re-initialisation are able to control interleaving of initialisation symbols with data symbols during the re-initialisation. This can be done for instance by multiplexing data and control or pilot tones in the same Discrete Multi Tone (DMT) symbols, or in alternate DMT symbols as will be explained in more detail below.

This way, depending on the cause of the retrain, the device according to the present invention may decide to keep data communication active in parallel to re-initialising, thereby avoiding service interruption.

Obviously, omitting steps from re-initialisation, shortening steps in the re-initialisation process and interleaving data communication with re-initialisation may be combined in various ways depending on the cause of the retrain and the anticipated requirements with respect to speed of re-initialisation and service interruption avoidance.

Further optionally, as defined by claim 5, the means for adapting execution of the re-initialisation may be able to gradually change data throughput during the re-initialisation by adapting a fraction of data symbols, a constellation order, and/or redundancy encoding during the re-initialisation.

Indeed, in a scenario where data communication and re-initialisation are executed in parallel in an interleaved manner, the ratio of data symbols versus initialisation symbols, the constellation order of the carriers, and the redundant encoding may be altered gradually to increase data throughput and protection against new faults as re-training progresses. This of course depends on the physical layer specifications which is in DSL multi-carrier-based allowing more degrees of freedom in the frequency dimension. In case of single carrier transmission, one would use the time scale for e.g. interleaving. In advanced systems using spread spectrum coding, spreading codes can be used to implement some of these rescue mechanisms.

According to a further optional aspect defined by claim 6, the means for receiving information indicative for a likely cause of said failure or for detecting a likely cause of the failure may be adapted to receive the information at or prior to interruption of communication over the subscriber line.

Thus, in one variant of the invention, the information on the cause of the failure and information indicative for the re-initialisation stages that will be shortened or omitted, may be shared at or prior to the stopping of communication. For some failures, dying gasp may be required.

Alternatively, as defined by claim 7, the means for receiving information indicative for a likely cause of said failure or for detecting a likely cause of the failure may be adapted to receive the information prior to the re-initialisation.

Thus, the cause of the failure and also the re-initialisation steps that will be shortened or omitted, in another variant of the invention can be communicated prior to the re-initialisation, e.g. during the handshake procedure specified in the ITU G.hs specification.

According to yet another alternative, defined by claim 8, the means for receiving information indicative for a likely cause of said failure or detecting a likely cause of the failure may be adapted to receive the information during first steps of the re-initialisation.

Hence, the cause of the failure and also the re-initialisation steps that will be shortened or omitted, can be communicated in yet another variant of the invention during the first stages of the re-initialisation itself.

As is further specified in claim 9, the device for controlling a re-initialisation according to the current invention may be integrated in a Digital Subscriber Line or DSL transceiver.

Thus, a DSL transceiver, either a CO or a CPE transceiver, may be equipped with a processor or reasoning engine that uses knowledge on the cause of a retrain to determine which type of retraining sequence is preferred. A data base maintaining a log of previous retrain information, i.e. a data base wherein causes of previous retrains and actions taken are logged, can be built-up progressively and consulted in order to take more appropriate decisions in view of the cause of faults on the line.

It is noticed that certain embodiments of the present invention may require adaptation of existing standards when implemented in the transceiver. In particular embodiments that enable parallel data communication and re-initialisation with dynamic adaptation of the data channel as re-initialisation progresses, require modification or extension of current VDSL2 standards. These embodiments are also tailored to next generation physical layer specifications that are most likely going to support noise and channel dynamics. It is also noticed that although the examples given in the current patent application are directed to DSL, any person skilled in the art of telecommunications shall understand that the current invention is applicable to other access technologies like Passive Optical Networks (PONs), wireless access technologies, etc. The term "subscriber line" as used in the claims and description consequently must be interpreted to cover any access line or access link that may need to be re-initialised as a result of a failure.

Alternatively, as is specified in claim 10, the device for controlling a re-initialisation according to the current invention may be integrated in a Digital Subscriber Line or DSL network analyser.

Indeed, the reasoning engine deciding on the type of re-initialisation in view of the cause of the fault may also be integrated in a network analyser that takes decisions for all subscriber lines connected to a single DSLAM, plural DSLAMs or even en entire DSL network.

As an alternative to integration in a transceiver or network analyser, the mapping of a re-initialisation process to a retrain cause in accordance with the current invention may be implemented fixedly in a database that is consulted upon a failure and that performs a one-to-one mapping.

In addition to a device for controlling re-initialisation as defined by claim 1, the present invention also concerns a corresponding method for controlling a re-initialisation of a subscriber line after a failure as defined by claim 11, the method comprising:
- receiving information indicative for or detecting a cause of the failure; and
- adapting execution of the re-initialisation depending on the cause.

### Brief Description of the Drawings

Fig. 1 illustrates an embodiment of the device and method for re-initialisation of a subscriber line according to the present invention;

Fig. 2 illustrates a sequence of symbols sent during re-initialisation in an embodiment of the current invention; and

Fig. 3 illustrates repetition encoding during re-initialisation in an embodiment of the current invention.

### Detailed Description of Embodiment(s)

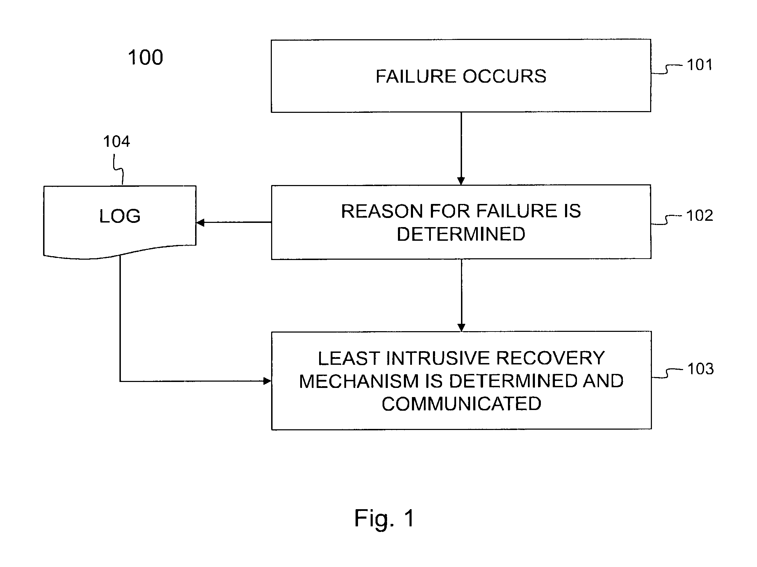

Fig. 1 is a functional block scheme of a first embodiment of the current invention that exploits knowledge on the root cause whenever a failure occurs 101, and fills a database 104 with service outage history and corresponding actions. The reason of the failure is determined by functional block 102 and re-initialization is shortened by determining the least intrusive recovery mechanism in functional block 103, making it appear seamless to higher layers. The re-initialization can be shortened, or be made less intrusive depending on the root cause determined in 102. One example of a less intrusive re-initialization is when re-initialization stages are performed in parallel with data transmission to avoid service interruption, albeit with lower data rate, as will be described in more detail below.

If a DSL system is considered by way of example, and it is assumed that a DSL transceiver determines that a retrain is required, it can acquire knowledge on the root cause of the retrain or the failure that triggered the retrain. For some steps in re-initialization, a DSL CO transceiver further has some freedom in selecting the length of certain stages independently from the CPE, so no additional communication or standardization change is needed. This is for example the case for the length of crosstalk estimation phases in the re-initialization process. Depending on the root cause, other steps in the re-initialization process can be omitted or shortened. Standardization could further allow for an exchange of the root cause of the retrain, which enables one side or both sides to determine which steps should be shortened and/or omitted. The root cause and/or the stages to shorten or omit can be communicated prior to the re-initialization, or in the first stages of the re-initialization.

In a first example, retrain may be caused by a loss of feeding power or a reset. In such case, it is unlikely that the crosstalk channels have been affected. Hence, the DSL transceiver may decide to shorten or even fully omit the crosstalk estimation steps in re-initialization. Also for retrain caused by reset or loss of feeding power, some phases in channel analysis may be omitted as the channel may not have changed significantly.

If a retrain is triggered by an unsuccessful invalid command or response, or an interoperability issue, the timing synchronization between CPE and CO may still be correct. In that case, certain steps in channel discovery can be cut short such as sample clock or symbol clock synchronization and phase locked loop (PLL). Also computation of the time domain equalizer (TEQ) coefficients and frequency domain equalizer (FEQ) coefficients may be omitted from the re-initialization.

Also, for a retrain the main target may be fast re-initialization speed rather than performance right after showtime. So if the line retrains, the transceiver can decide to omit fine adjustment of the bit loading and gain settings and take rough signal to noise ratio (SNR) estimates as a basis rather than fine measurements of long duration with optimal water filling and optimal code settings. The settings can then be fine-tuned during showtime, when the applications are again up and running. The decision to do so according to the invention will be triggered by the root cause analysis of the retrain, but can also, if needed, make use of knowledge on higher layers, e.g. knowledge on which applications were running at the time of failure.

Some line parameters that are derived during initialization are specific to the loop length, e.g. timing advance. Although a change in line length can occur, e.g. if the end-user changes the in-home wiring or the position of the CPE in his home or if a technician rewires lines in the access network, it is unlikely that the line length will change in the time span of an immediate retrain as a result of which these settings do not need to be re-determined and these steps may be omitted from the re-initialization procedure.

Even more interestingly, by exploiting failure analysis, the transceiver can decide to not re-initialize at all where it would traditionally re-initialize. The rationale is that at least data communication remains active, albeit at a lower speed, e.g. by using an alternative bit allocation table.

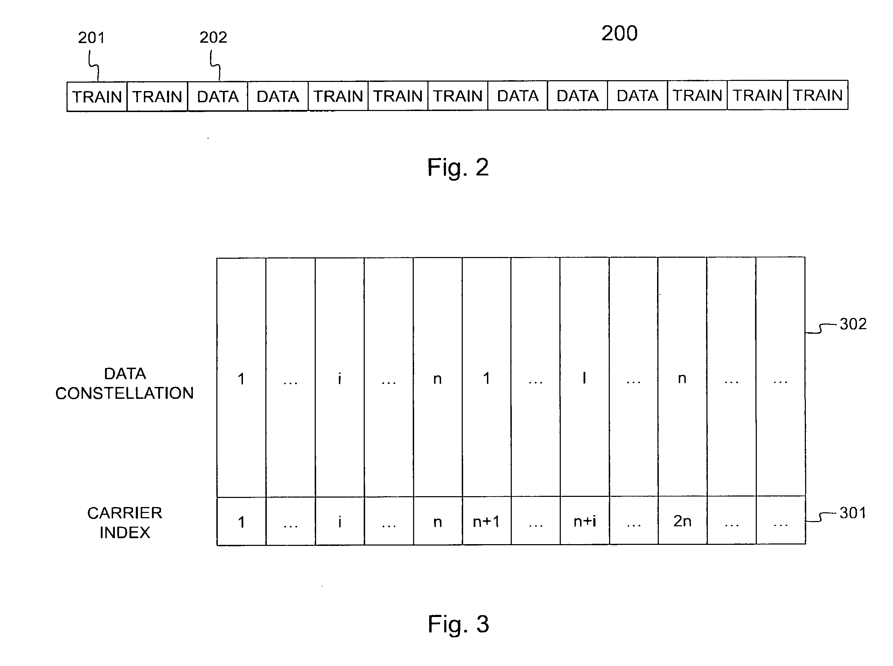

In yet another embodiment of the current invention, re-initialization runs in parallel with data transmission. Such embodiment is illustrated by Fig. 2 which shows a seamless re-initialization sequence 200 that involves first some essential training symbols 201 with a certain pattern, e.g. to train the phase of the direct channel, after which data 202 and training symbols are alternated to allow low rate data throughput during re-initialization. For this embodiment, standardization effort is required in order to allow performing some of the initialization steps in parallel with low rate data transmission. Depending on which steps of initialization are required and the throughput that is required and bandwidth that is still available, the initialization steps could also be performed on the synchronization (SYNC) symbols, which would be slower and prone to inter symbol interference (ISI) from data symbols.

If the keep-alive data rate required during re-initialization is assumed to be 10 Mb/s worst case, then this can easily be achieved robustly in realistic conditions by transmitting data 202 during half of the symbols while sending retrain symbols 201 on the other half of the symbols. The first stages of the retrain would focus on allowing coarse data transmission on data symbols. For example, if data consist of a 4-QAM constellation, there is no need for accurate noise or channel attenuation information if in the normal operations a higher number of bits can be loaded on some of the tones. So focus can be given at training the phase of the direct channel. Once this phase has been trained, 625 distinct tones with 4-QAM bit constellations are sufficient (in the example of 17.25 kHz tone spacing) to transmit 10 Mb/s using half of the symbols as data symbols 202. This means that low-complex principles like repetition encoding and majority voting can be used: the 625 constellations can be repeated 6 to 12 times per Discrete Multi Tone (DMT) symbol depending on the bandwidth exploited. This is sufficient for low-complex robust decoding, e.g. based on majority voting. It is noticed that repetition encoding can also be used independently of modulation, i.e. in the coding functional block.

During the alternating sequence of data 202 and training 201 symbols, the constellation order, repetition encoding and fraction of data symbols may be altered to gradually increase throughput as training progresses. This is for instance illustrated by Fig. 3 wherein 301 represents the index of carriers or sub-bands in a multi-carrier transmission system like for instance DMT based DSL. In Fig. 3, 302 represents the data constellation for the different carriers. During re-initialization, repetition encoding is used in the modulation scheme of Fig. 3 for robust demodulation and decoding. The data repetition can be seen as a basic simplified form of data encoding in the frequency domain.

It is noticed that some of the above described embodiments are tailored towards the next generation physical layer, the so called 4G DSL, where the noise and channel dynamics are expected to increase in comparison to current VDSL2. While for the legacy VDSL2 some embodiments are still applicable without standardization, others require few acceptable standardization adaptations.

It is further noticed that there can be a fixed mapping of a root cause to an re-initialization procedure, e.g. via a lookup table in the data base. Alternatively, the DSL transceiver or network analyzer may have a reasoning engine that uses knowledge of the retrain cause to dynamically determine which type of re-initialization sequence is required. A data base or log on the previous retrain information, like 104 in Fig. 1, can be built-up progressively which will help in taking appropriate decisions.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A device (100) for controlling a re-initialisation of a subscriber line after a failure, said device comprising:
- means (102, 104) for receiving information indicative for a likely cause of said failure or for detecting a likely cause of said failure; and
- means (103) for adapting execution of said re-initialisation depending on said cause.

2. A device (100) for controlling a re-initialisation according to claim 1, wherein said means (103) for adapting execution of said re-initialisation are able to omit one or more steps of a normal initialisation procedure from said re-initialisation.

3. A device (100) for controlling a re-initialisation according to claim 1, wherein said means (103) for adapting execution of said re-initialisation are able to shorten one or more steps of a normal initialisation procedure during said re-initialisation.

4. A device (100) for controlling a re-initialisation according to claim 1, wherein said means (103) for adapting execution of said re-initialisation are able to control interleaving of initialisation symbols (201) with data symbols (202) during said re-initialisation.

5. A device (100) for controlling a re-initialisation according to claim 4, wherein said means (103) for adapting execution of said re-initialisation are able to gradually change data throughput during said re-initialisation by adapting a fraction of data symbols (202), a constellation order, and/or redundancy encoding during said re-initialisation.

6. A device (100) for controlling a re-initialisation according to claim 1, wherein said means (102, 104) for receiving information indicative for a likely cause of said failure or for detecting a likely cause of said failure are adapted to receive said information at or prior to interruption of communication over said subscriber line.

7. A device (100) for controlling a re-initialisation according to claim 1, wherein said means (102, 104) for receiving information indicative for a likely cause of said failure or for detecting a likely cause of said failure are adapted to receive said information prior to said re-initialisation.

8. A device (100) for controlling a re-initialisation according to claim 1, wherein said means (102, 104) for receiving information indicative for a likely cause of said failure or for detecting a likely cause of said failure are adapted to receive said information during first steps of said re-initialisation.

9. A device (100) for controlling a re-initialisation according to claim 1, said device (100) being integrated in a Digital Subscriber Line or DSL transceiver.

10. A device (100) for controlling a re-initialisation according to claim 1, said device (100) being integrated in a Digital Subscriber Line or DSL network analyser.

11. A method for controlling a re-initialisation of a subscriber line after a failure, said method comprising:
- receiving information indicative for a likely cause of said failure or for detecting a likely cause of said failure; and
- adapting execution of said re-initialisation depending on said cause.
